# EUROPÄISCHE PATENTSCHRIFT

(11) **EP 2 127 241 B1**
(45) Veröffentlichungstag und Bekanntmachung des Hinweises auf die Patenterteilung: **06.06.2012**
(21) Anmeldenummer: 07711225.8
(22) Anmeldetag: 02.03.2007
(51) Int. Cl.: H04L 12/42, H04L 12/46

(54) **ZIELPORTSUCHE IN NETZWERKEN AUS GEKOPPELTEN TEILNETZEN**
DESTINATION PORT SEARCH IN NETWORKS CONSISTING OF COUPLED SUBNETWORKS
RECHERCHE DE PORT CIBLE DANS DES RÉSEAUX CONSTITUÉS DE SOUS-RÉSEAUX RELIÉS

(43) Veröffentlichungstag der Anmeldung: 02.12.2009
(73) Patentinhaber: Siemens Aktiengesellschaft, 80333 München (DE)
(72) Erfinder: BRÜCKNER, Dieter, 96199 Unterleiterbach (DE)
(86) Internationale Anmeldenummer: PCT/DE2007/000393
(87) Internationale Veröffentlichungsnummer: WO 2008/106907

(56) Entgegenhaltungen:
- WO-A-03/073283
- US-A1- 2006 007 939
- US-B1- 6 765 914
- US-B1- 6 798 775

## Beschreibung

Die Erfindung betrifft ein Verfahren zur Bestimmung zumindest eines Zielports, an den ein an einem Empfangsport eines Netzwerkknotens mit zumindest zwei in einem Netzwerk verbundenen Ports-empfangener Frame weitergeleitet wird, wobei das Netzwerk in zumindest ein Teilnetzwerk untergliedert ist und jedem Teilnetzwerk eine VLAN-ID zugewiesen ist.

Die Erfindung betrifft ferner einen Netzwerkknoten mit zumindest zwei in einem Netzwerk verbundenen Ports, wobei das Netzwerk in zumindest ein Teilnetzwerk untergliedert ist und jedem Teilnetzwerk eine VLAN-ID zugewiesen ist.

Ein derartiges Verfahren kommt bei Netzwerken, die aus gekoppelten Teilnetzen wie VLANs ("Virtual Local Area Networks", vgl. IEEE 802.1Q) bestehen, zum Einsatz. Herkömmliche Verfahren der eingangs genannten Art sind allerdings nicht für die komplexen Anforderungen redundanter Kommunikation, insbesondere bei redundant gekoppelten Ringstrukturen, geeignet. Hingegen beruht das bisher beispielsweise in Profinet implementierte Ring-Redundanz-Konzept auf der Tatsache, dass die Suche der Ziel- bzw. Weiterleiteports für zyklische redundante Frames sich auf die Einträge der FDB-Tabelle ("Forwarding DataBase") stützt, welche mit Hilfe der Standard-TCP/IP-Kommunikation aufgebaut worden sind. Will man dieses Verfahren auch auf beliebige redundante Netzwerkstrukturen und im speziellen auf redundant gekoppelte Ringstrukturen anwenden, so zeigen sich aufgrund der mehrfachen (i.d.R. doppelten) Kopplung der Ringe besondere Probleme.

Für TCP/IP-Kommunikation sind die gekoppelten Ringstrukturen mit Hilfe von Spanning-Tree- oder Rapid-Spanning-Tree-Protokollen zu nicht redundanten Netzen aufgebrochen (NRT-Blocking). Dies führt dazu, dass ein Teilnehmer einer Ringstruktur nur über eine Koppelstrecke in der anderen Ringstruktur gelernt werden kann. Am jeweiligen Koppelknoten der anderen Koppelstrecke wird er hingegen über einen redundanten Port dieser Ringstruktur gelernt. Ein zyklisch redundanter Frame, wie er in Profinet für echtzeitfähige zyklische Kommunikation verwendet wird und welcher einen Teilnehmer der anderen Ringstruktur adressiert, wird daher lediglich über einen Koppelknoten in den anderen Ring weitergeleitet. Am anderen Koppelknoten hingegen erfolgt eine Weiterleitung lediglich über die redundanten Ports. Eine sporadische Störung auf der nicht-geblockten Koppelstrecke führt damit zu einem Frameverlust im anderen Ring. Die redundante Kopplung beider Ringe ist damit nicht gegeben.

Dies zeigt, dass in gekoppelten Ringstrukturen für zyklisch redundante Frames der bisherige Lern-Mechanismus bzw. die bisherige Zielportsuche nicht geeignet ist, da die Zielportsuche der zyklisch redundanten Frames an das Lernen der Teilnehmer bei TCP/IP-Kommunikation gekoppelt und damit davon abhängig ist. Es ist somit eine Lösung,zu finden, in der diese Kopplung nicht auftritt und die die folgenden Randbedingungen erfüllt:
- Zyklisch redundante Frames dürfen nur dann aus dem eigenen redundanten Ring ausgeleitet werden, wenn sie einen Teilnehmer in einem anderen Ring adressieren (kein generelles Fluten der Frames in das gesamte Netzwerk) und
- zyklisch redundante Frames müssen, wenn sie ausgeleitet werden, immer redundant über beide Koppelstrecken in den angeschlossenen Ring ausgekoppelt werden, um bei Ausfall einer Koppelstrecke die Kommunikationsbeziehung weiter aufrechtzuerhalten.

Mit heutigen Geräten (z.B. Switches), insbesondere im Profinet-Umfeld, ist eine redundante Kopplung mehrerer Ringstrukturen und damit eine Zielportfindung für die zyklisch redundanten Frames nur mit Hilfe von Software möglich. Dabei müssen im SW-Stack die Pfade aller Kommunikationsbeziehungen sowie die Netztopologie bekannt sein. Die so erreichbare Datenrate ist stark eingeschränkt und entspricht in keiner Weise den geforderten Mengengerüsten. Eine Kopplung über mehrere Ringe hinweg (Reihenschaltung von Ringen), wie dies z.B. in Zugsystemen der Fall ist, kann nur mit größeren Einschränkungen realisiert werden. Anforderungen, wie sie heute aus der Fertigungs- und Prozessindustrie kommen, können derzeit nicht umgesetzt werden. Rein in Hardware (z.B. Switches) realisierbare Lösungen mit kurzen Latenzzeiten, welche für die geforderten Datenmengen notwendig wären, liegen derzeit nicht vor.

Aus der US 6,798,775 ist bereits ein Verfahren zur Übertragung von Datenpaketen bekannt, in einem Netzwerk welches zumindest in zwei Teilnetzwerke untergliedert ist. Die zu übertragenden Datenpakete werden mit einer zusätzlichen Identifikationskennung versehen, welche das Ziel-Teilnetzwerk adressiert. Bei Empfang eines Datenpaketes durch einen Port in einem Netzelement wird dieses Datenpaket an alle die der zumindest einen Identifikationskennung zugeordneten Ports weitergeleitet, die nicht gleich dem Empfangsport sind.

Die WO 03/073283 beschreibt ebenfalls einen Switch, welcher eine Verbindung zwischen sogenannten virtual LANs herstellt. Es wird eine Kennzeichnung des Quell-Netzwerks und des Ziel-Netzwerks bereit gestellt zur Weiterverteilung der empfangenen Datenpakete an die jeweiligen Ausgangsports.

Der Erfindung liegt die Aufgabe zugrunde, ein verbessertes Verfahren bzw. einen Netzwerkknoten anzugeben, mit dem Zielports für Frames in einem Netzwerkknoten schnell bestimmt werden können.

Diese Aufgabe wird durch ein Verfahren mit den Merkmalen des Anspruchs 1 gelöst.

Die Aufgabe wird weiter durch einen Netzwerkknoten mit den in Anspruch 7 angegebenen Merkmalen gelöst.

Für die Weiterleitung bzw. Ausleitung eines redundanten zyklischen Frames aus einer Ringstruktur werden die Einträge in der FDB-Tabelle nicht mehr verwendet. Die Weiter- bzw. Ausleitung erfolgt über die VLAN-Adresstabelle. Dabei wird jedem Teilnetzwerk, d.h. jeder Ringstruktur, eine eigene VLAN-ID zugeteilt. Wenigstens die Koppel-Switches arbeiten dabei in einem Tag-Mode (die VLAN-Tabelle ist relevant), alle anderen Switches (Netwerkknoten) können weiterhin in einem Basic-Mode (die VLAN-Tabelle ist irrelevant) betrieben werden.

In der VLAN-Tabelle sind jeder VLAN-ID die Ports zugeordnet, die mit Netzwerkknoten des eigenen Teilnetzwerkes verbunden sind. Wenn der Netzwerkknoten weitere, mit anderen Teilnetzwerken verbundene, Ports aufweist, sind zusätzlich den VLAN-IDs, die anderen Teilnetzwerken zugeteilt sind, jene der weiteren Ports zugeteilt, die mit den betreffenden Teilnetzwerken verbunden sind bzw. zu den betreffenden Teilnetzwerken hinführen (beispielsweise durch weitere Teilnetzwerke hindurch). Wird nun ein Frame an einem Port des Netzwerkknotens empfangen, so wird diesem zumindest eine VLAN-ID zugeordnet, unter der dann in der VLAN-Tabelle die dieser VLAN-ID zugeordneten Ports nachgeschlagen werden. Grundsätzlich kann die Zuordnung der zumindest einen VLAN-ID zum empfangenen Frame auf verschiedenen Schichten (laut OSI-Modell) im Netzwerkknoten realisiert werden, z.B. aufgrund einer MAC- oder IP-Adresse des Frames. Dabei wird dem Frame jedenfalls die VLAN-ID des zumindest einen Teilnetzwerkes des Empfängers bzw. der Empfänger zugeordnet (je nachdem, ob es sich um einen Unicast-, Multicast- oder Broadcast-Frame handelt). Anhand der VLAN-Tabelle werden dann die dieser VLAN-ID zugeordneten Ports, die nicht gleich dem Empfangsport sind, als Zielports bestimmt, an die der Frame weitergeleitet wird.

Ist beispielsweise ein Netzwerkknoten (Koppel-Switch) mit zwei Ports mit dem eigenen Teilnetzwerk (Ring) und mit einem weiteren Port mit einem weiteren Ring verbunden, so werden in der VLAN-Tabelle der VLAN-ID des eigenen Rings die ersten beiden Ports zugeordnet und der VLAN-ID des weiteren Rings alle Ports. Einem an einem Port des eigenen Teilnetzwerkes empfangener Frame, der an einen Teilnehmer des eigenen Rings adressiert ist, wird also die VLAN-ID des eigenen Ringes zugeordnet, und es wird anhand der VLAN-Tabelle ermittelt, dass der Zielport lediglich der zweite mit dem eigenen Ring verbundene Port ist, da der Empfangsport nicht als Zielport bestimmt wird. Ist der Frame (auch) an einen Teilnehmer des weiteren Rings adressiert, so wird dem Frame die VLAN-ID des weiteren Rings zugeordnet und anhand der VLAN-Tabelle alle Ports außer dem Empfangsport als Zielports bestimmt, d.h. der Frame wird an den zweiten mit dem eigenen Ring verbundenen Port und an den mit dem weiteren Ring verbundenen Port weitergeleitet. Die Weiterleitung innerhalb des eigenen Rings wird auch dann vorgenommen, wenn der Frame ausschließlich für einen Teilnehmer des weiteren Rings vorgesehen ist, da beispielsweise bei Vorliegen einer redundanten Kopplung mit-dem weiteren Ring der Frame noch dem redundanten Koppelknoten des eigenen Teilnetzwerkes zur Verfügung gestellt werden muss. Dabei kann der im Ring umlaufende Frame entweder durch den Einspeiseknoten oder durch ein spezielles Verfahren zur Frameauslöschung mittels eines redundant eingespeisten Duplikat-Frames aus dem Ring entfernt werden.

Um zu-verhindern, dass bei einer redundanten Kopplung zwischen zwei Teilnetzwerken der ausgeleitete Frame vom redundanten Koppelknoten erneut in den Empfänger-Ring eingeleitet wird, muss der über die redundante Koppelstrecke ausgeleitete Frame vorteilhafterweise mit dem speziellen Verfahren ebenfalls aus dem Netzwerk gefiltert werden. Allerdings wird bei Verwendung der VLAN-ID des Empfänger-Rings zur Zielportsuche nur dann in die jeweiligen Ringe, eingespeist, wenn dies durch die VLAN-Tabelle der Koppelknoten parametriert worden ist. Dies hat zur Folge, dass ein redundanter Frame, welcher in einen Empfänger-Ring ausgeleitet worden ist, von dort nicht wieder in den Einspeise-Ring zurück transferiert werden kann, da die VLAN-Tabelle der Koppelknoten des Empfänger-Rings dies nicht zulässt. Unter gewissen Netzkonstellationen und Telegrammlaufzeiten kann es daher zum mehrfachen Einspeisen von zyklischen Frames in den Empfänger-Ring kommen, da der zur Auslöschung notwendige Duplikat-Frame den Original-Frame auf der redundanten Koppelstrecke nicht vorhanden ist. Der redundante zyklische Frame muss also wieder über die redundante Koppelstrecke in den Einspeise-Ring zurückgespeist werden. Es ist daher von großem Vorteil, dem Frame neben der VLAN-ID des Empfängers (VLAN-DestinationID) auch die VLAN-ID des Absenders (VLAN-SourceID) zuzuordnen. Die Vereinigungsmenge der diesen VLAN-IDs gemäß VLAN-Tabelle zugeordneten Ports abzüglich des Empfangsports ergibt die tatsächlichen Zielports des jeweiligen Frames.

Diese im Netzwerkknoten realisierte Lösung weist dabei kurze Latenzzeiten auf, die für die insbesondere in der Fertigungs- und Prozessindustrie geforderten Datenmengen notwendig sind. In einer heute in der Fertigungsindustrie typischen Netztopologie sind jeweils redundante Maschinen-Ringe, die jeweils eine Fertigungsaufgabe selbständig und unabhängig voneinander bearbeiten, an einen übergeordneten Fabrik-Ring gekoppelt, mittels dem z.B. Diagnose- bzw. Wartungs- und Alarmmeldungen geführt werden. Die eigentlichen Steuerungsaufgaben laufen allerdings in den Maschinen-Ringen autark ab. Um die Hochverfügbarkeit eines solchen Netzes sicherzustellen, ist es daher notwendig, die Kopplung der Maschinen-Ringe an den Fabrik-Ring redundant auszuführen. In dieser Konstellation ist dann trotz Ausfalls einer Kommunikationsstrecke in jedem Teil-Ring der Produktionsablauf weiterhin gewährleistet. Gleiches gilt für die Erweiterbarkeit bzw. den Austausch von Komponenten im laufenden Produktionsbetrieb. Das erfindungsgemäße Verfahren der Zielportsuche über VLAN-Erweiterung ist dabei auch für mehrfach redundant gekoppelte Ringtopologien, wie sie für hochverfügbare Netzwerke bevorzugt eingesetzt werden, geeignet.

Im Gegensatz zur herkömmlichen Zielportsuche über FDB-Tabelle wird die Zielportsuche bei dem vorgeschlagenen Verfahren vollständig auf VLAN-IDs (definiert in der Ethernet-Norm IEEE 802.xx) umgestellt. Die Einträge der FDB-Tabelle gehen für zyklisch redundante Frames nicht in die Findung der Zielports des Switches mit ein. Lediglich für den Empfang des Frames am lokalen API (Software-Schnittstelle) werden die Einträge der FDB-Tabelle benötigt. Dem jeweiligen Frame werden dabei sowohl die VLAN-ID der redundanten Zielstruktur (typischerweise Ringe) als auch vorteilhafterweise die VLAN-ID der Quellstruktur zugeordnet. Somit können redundante zyklische Frames gezielt in eine Nachbar-Struktur eingeleitet aus auch gezielt aus dieser Struktur ausgeleitet werden, um redundante Frames zu filtern. Insgesamt ergeben sich folgende Vorteile:
- Redundante zyklische Frames werden nur dann aus dem eigenen Ring ausgeleitet werden, wenn sie einen Teilnehmer in einem anderen Ring adressieren (kein generelles Fluten aller Frames), woraus sich eine wesentlich bessere Ausnutzung der Bandbreite ergibt.
- Redundante zyklische Frames werden nur "gerichtet" ausgeleitet werden, also nur in Richtung des Ziel-Teilnehmers bzw. Ziel-Rings (abgesehen von der beschriebenen vorteilhaften Rückeinspeisung in die Quellstruktur zur Löschung redundanter Frames).
- Redundante zyklische Frames werden, wenn sie ausgeleitet werden, immer redundant über alle Koppelstrecken in den angeschlossenen Ring ausgekoppelt.

In einer vorteilhaften Form der Ausgestaltung wird zumindest eine dem Frame zuzuordnende VLAN-ID in einen VLAN-Tag des Frames geschrieben. Durch diesen VLAN-Tag wird nach IEEE 802.1Q der Ethernet-Frame um 4 Byte erweitert, wobei die letzten 12 Bits zur Aufnahme der VLAN-ID vorgesehen sind. Hieraus ergeben sich bei Aufnahme einer VLAN-ID 4096 zur Verfügung stehende VLAN-IDs; bei Aufnahme von zwei VLAN-IDs in den VLAN-Tag des Frames (z.B. VLAN-DestinationID und VLAN-SourceID) reduziert sich die Anzahl der möglichen VLAN-IDs von 2¹² auf 2⁶=64. Dies ist jedoch für die zu realisierenden gekoppelten Ring-Topologien ausreichend. Je nach Konfiguration des Netzwerkknotens sind verschiedene Einsatzformen dieser Ausführungsform denkbar: So kann auf diese Weise bei einem nicht getaggten Frame - d.h. einem Frame ohne VLAN-Tag - der Frame um einen VLAN-Tag erweitert werden, beispielsweise weil der Switch im Tag-Mode betrieben wird und einen solchen VLAN-Tag erwartet. Ebenso kann natürlich in einem vorhandenen VLAN-Tag eine zusätzliche VLAN-ID eingetragen werden, z.B. neben einer vorhandenen VLAN-DestinationID eine dem Frame zuzuordnende VLAN-SourceID.

In einer weiteren vorteilhaften Ausführungsform wird als eine dem Frame zuzuordnende VLAN-ID die VLAN-ID des Teilnetzwerkes gewählt, zu dem der Netzwerkknoten gehört. Damit ist für redundante zyklische Frames, die innerhalb des eigenen Rings übertragen werden, ein Tagging am Einspeiseknoten nicht notwendig. Im Koppelknoten werden diese Frames dann am jeweiligen Empfangsport mit einer Default-ID gleich der eigenen VLAN-ID versehen und damit nicht ausgeleitet. Zudem kann bei dieser Ausführungsform der Netzwerkknoten so konfiguriert werden, dass z.B. bei Vorliegen von nur einer VLAN-ID eines anderen Ringes die eigene VLAN-ID dem Frame zusätzlich als VLAN-SourceID zugeordnet wird, um eine Auslöschung eines redundanten Frames auf einer redundanten Koppelstrecke zu bewirken.

In einer weiteren vorteilhaften Ausführungsform wird zumindest eine dem Frame zuzuordnende VLAN-ID aus einem VLAN-Tag des Frames entnommen. Dies entspricht gewissermaßen der "Standard-Variante" für VLANs: Einspeisen eines getaggten Frames, Betreiben der Netzwerkknoten im Tag-Mode, Entnahme der VLAN-(Destination)ID aus dem VLAN-Tag des Frames und Zuordnung zu den Zielports laut VLAN-Tabelle. Erweiterungen gemäß anderer Ausführungsformen wie Zuordnung einer weiteren VLAN-(Source)ID - beispielsweise aufgrund der MAC-Quelladresse des Frames - bleiben davon unberührt.

In einer weiteren vorteilhaften Ausführungsform wird ein VLAN-Tag des Frames bei Weiterleitung des Frames entfernt. Hierdurch kann beispielsweise bei einem ungetaggt eingespeisten Frame, der durch den Netzwerkknoten mit einem Default-Tag versehen wurde, dieser Default-Tag durch den Netzwerkknoten wieder abgezogen werden. Somit ist die für die redundanten zyklischen Frames innerhalb des Rings eine bessere Nutzung der Bandbreite gegeben, da die Framelänge um die VLAN-Erweiterung reduziert ist. Denkbar ist auch eine Konfigurierung des Koppelknotens, die den VLAN-Tag des Frames bei Erreichen des Ziel-Rings zur Reduzierung der Framelänge entfernt.

In einer weiteren vorteilhaften Ausführungsform wird die Bestimmung der Zielports derart durchgeführt, dass einer ersten Menge die der zumindest einen VLAN-ID zugeordneten Ports und einer zweiten Menge die in dem Netzwerk verbundenen Ports, die nicht gleich dem Empfangsport sind, zugewiesen werden und als Zielports die Elemente der Schnittmenge aus der ersten und der zweiten Menge bestimmt werden. Hierdurch wird der Tatsache Rechnung getragen, dass in redundanten Netzwerkstrukturen im beispielsweise Profinet-Umfeld die im Netzwerk verbundenen Ports typischerweise speziell als redundante Ports - R-Ports - ausgezeichnet werden und die Switches so parametriert sind, dass redundante zyklische Frames, die an einem R-Port empfangen werden, an allen anderen R-Ports weitergeleitet werden. Somit ergeben sich die Elemente der zweiten Menge zwanglos aus der R-Port-Parametrierung der Switches, während die Elemente der ersten Menge der VLAN-Tabelle entnommen werden können. Daher ist die Zuweisung von Ports zur ersten oder zweiten Menge nicht notwendig als eigenständiger Verfahrensschritt zu sehen.

Im Folgenden wird die Erfindung anhand der in den Figuren dargestellten Ausführungsbeispiele näher beschrieben und erläutert. Es zeigen:
- FIG 1: einen Netzwerkknoten bei Empfang eines Frames,
- FIG 2: zwei redundant gekoppelte Netzwerkringe,
- FIG 3: zwei mehrfach redundant gekoppelte Netzwerkringe mit Rückeinspeisung.

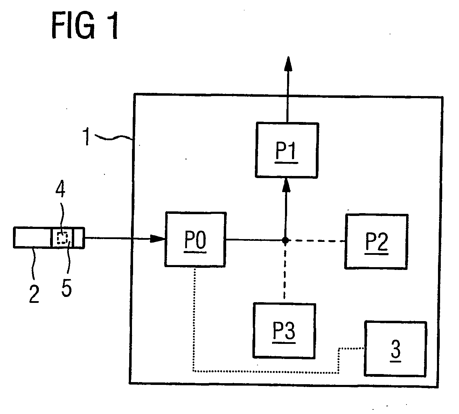

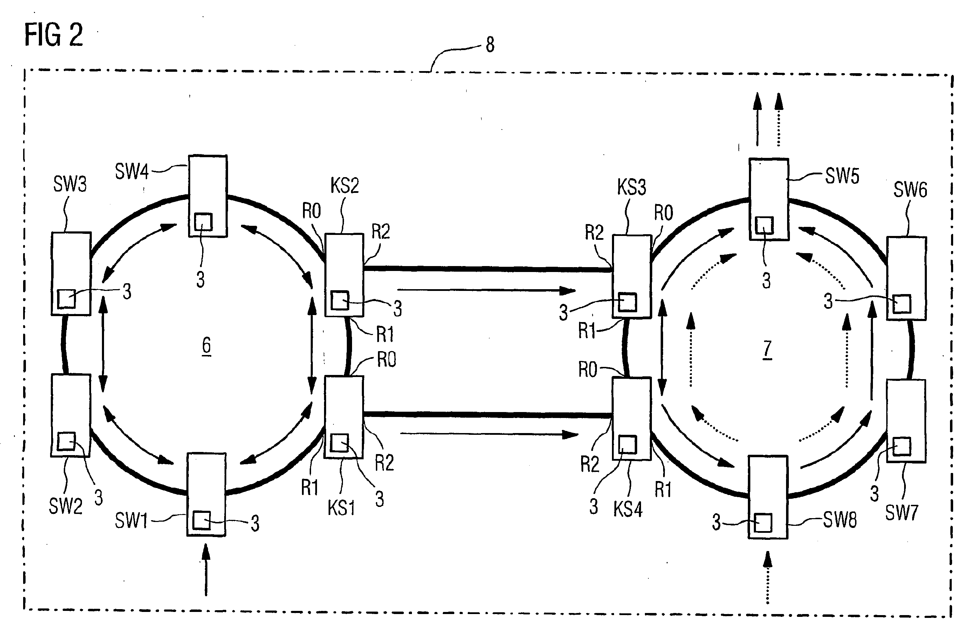

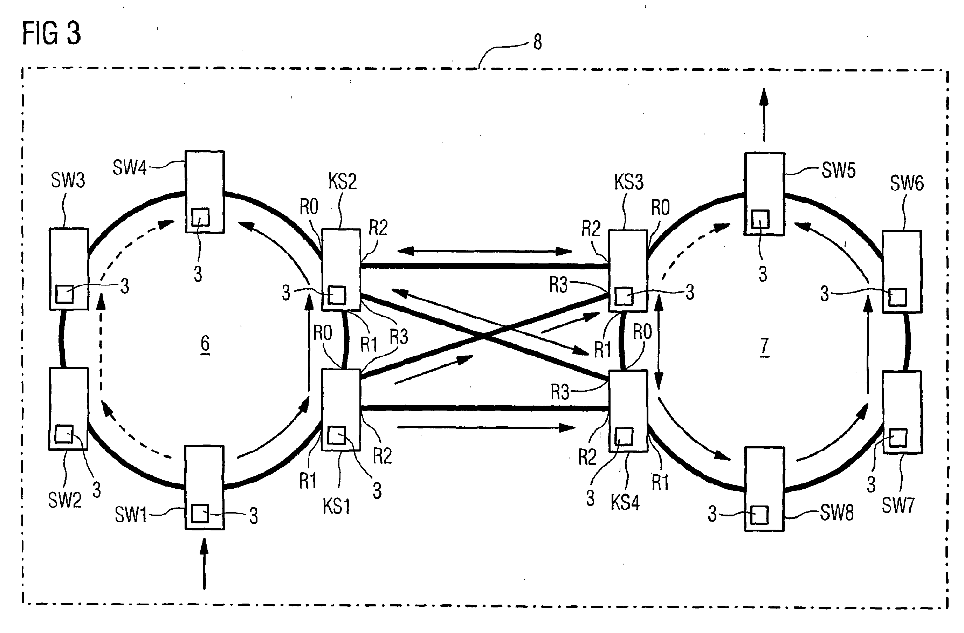

Fig 1 zeigt einen Netzwerkknoten 1 mit vier in einem Netzwerk (wie z.B. Bez. 8 in Figs. 2 und 3) verbundenen Ports P0-P3, wobei das Netzwerk aus mehreren Teilnetzwerken (vgl. Bez. 6, 7 in Figs. 2 und 3) besteht und jedem Teilnetzwerk eine VLAN-ID 4 zugeordnet ist. Jeder VLAN-ID 4 sind zumindest zwei der Ports P0-P3 zugeordnet, wobei die Zuordnung der Ports P0-P3 zu den jeweiligen VLAN-IDs 4 in einer VLAN-Tabelle 3 im Netzwerkknoten 1 abgelegt ist. Der Netzwerkknoten 1 ist Bestandteil eines Teilnetzwerkes, mit dem er über die Ports P0 und P1 verbunden ist. Die Ports P2 und P3 verbinden den Netzwerkknoten 1 mit weiteren Netzwerkknoten eines anderen Teilnetzwerkes. Somit sind in der VLAN-Tabelle 3 der VLAN-ID 4 des eigenen Teilnetzwerkes die Ports P0 und P1 zugeordnet und der VLAN-ID 4 des anderen Teilnetzwerkes die Ports P0-P3, da Frames 2 für das andere Teilnetzwerk auch im eigenen Teilnetzwerk weitergeleitet werden. Im dargestellten Beispiel wird am Port P0 ein Frame 2 empfangen, der einen VLAN-Tag 5 mit einer VLAN-ID 4 aufweist. Dabei bezeichnet die VLAN-ID 4 des getaggten Frames 2 das Teilnetzwerk des Ziel-Teilnehmers, der im Beispiel zum selben Teilnetzwerk wie der Koppelknoten 1 gehört. Der Knoten 1 erkennt den VLAN-Tag 5 und entnimmt diesem die dem Frame 2 zuzuordnende VLAN-ID 4. Die dieser VLAN-ID 4, die das eigene Teilnetzwerk des Knotens 1 bezeichnet, zugeordneten Ports P0-P3 sind gemäß der VLAN-Tabelle 3 die Ports P0 und P1. Als Zielports werden alle zugeordneten Ports P0, P1 bestimmt, die nicht gleich dem Empfangsport P0 sind: Es ergibt sich also als Zielport P1.

Fig 2 zeigt ein Netzwerk 8 aus zwei Netzwerkringen (Teilnetzwerken) 6, 7, die redundant über Koppel-Switches (Netzwerkknoten) KS1-KS4 miteinander gekoppelt sind. Ring 6 besteht aus den Switches (Netzwerkknoten) SW1-SW4 sowie den Koppel-Switches KS1 und KS2, Ring 7 wird durch die Switches SW5-SW8 sowie den Koppel-Switches KS3 und KS4 gebildet. Dabei ist Koppel-Switch KS1 mit KS4 und Koppel-Switch KS2 mit KS3 verbunden. Die im Netzwerk 8 verbundenen Ports der Switches SW1-SW8 und der Koppel-Switches KS1-KS4 sind dabei speziell als redundante Ports, R-Ports, ausgewiesen, die in der Figur nur bei den Koppel-Switches KS1-KS4 jeweils mit R0-R2 bezeichnet sind. In den VLAN-Tabellen 3 der Koppelknoten KS1 und KS2 sind der VLAN-ID 4 des eigenen Ringes 6 jeweils die Ports R0 und R1 zugeordnet, der VLAN-ID 4 des anderen Ringes 7 hingegen alle Ports R0-R2. Entsprechendes gilt für die VLAN-Tabellen 3 der Koppel-Switches KS3 und KS4.

Über den Netzwerkknoten SW1 in Ring 6 wird ein zyklischer Frame eingespeist, der an den Knoten SW5 in Ring 7 adressiert ist, und in beiden Richtungen versendet. Dabei wird der Frame 2 getaggt eingespeist, d.h. mit der VLAN-ID 4 des Teilnetzwerkes 7, in dem sich der Empfänger SW5 befindet, im VLAN-Tag 5. An den im Tag-Mode betriebenen Koppel-Switches KS1 und KS2 wird anhand der R-Port-Parametrierung der Ports R0-R2 ermittelt, dass der an Port R1 empfangene Frame 2 an alle anderen R-Ports R0 und R2 weitergeleitet werden soll. Die VLAN-Adresstabelle 3 der Koppel-Switches KS1 und KS2 ergibt als Ports für die Weiterleitung Ports R0, R1 und R2. Das Ergebnis der Zielportfindung ist die Schnittmenge beider Teilergebnisse und liefert somit Port R0 und Port R2. Der Frame 2 mit der VLAN-ID 4 des Ringes 7 wird also in die benachbarte Ringstruktur 7 über Port R2 ausgeleitet und im eigenen Ring 6 über Port R0 weitergeleitet.

Ein weiterer getaggter Frame 2 wird über den Netzwerkknoten SW8 in Teilnetzwerk 7 ebenfalls an den Knoten SW5 redundant eingespeist. An den im Tag-Mode betriebenen Koppel-Switches KS3 und KS4 wird anhand der R-Port-Parametrierung der Ports R0-R2 ermittelt, dass der an Port R1 empfangene Frame 2 an alle anderen R-Ports R0 und R2 weitergeleitet werden soll. Die VLAN-Adresstabelle 3 der Koppel-Switches KS3 und KS4 ergibt als Ports für die Weiterleitung Ports R0 und R1, da nur diese Ports R0, R1 der eigenen VLAN-ID 4 zugeordnet sind. Das Ergebnis der Zielportfindung ist die Schnittmenge beider Teilergebnisse und liefert somit nur Port R0. Der Frame 2 mit der VLAN-ID 4 des eigenen Ringes 7 wird also nicht in die benachbarte Ringstruktur 6 über Port R2 ausgeleitet, sondern lediglich im eigenen Ring 7 über Port R0 weitergeleitet.

In Figur 3 ist eine mehrfach redundante Kopplung zweier Netzwerkringe 6, 7 dargestellt, wie sie implementiert werden muss, um auch bei Ausfall jeweils eines Koppel-Switches KS1-KS4 in jedem Ring 6, 7 noch ein verfügbares Netzwerk zu garantieren. Ring 6 besteht aus den Switches (Netzwerkknoten) SW1-SW4 sowie den Koppel-Switches KS1 und KS2, Ring 7 wird durch die Switches SW5-SW8 sowie den Koppel-Switches KS3 und KS4 gebildet. Dabei ist jeder der Koppel-Switches KS1-KS4 mit jedem der anderen verbunden, wodurch sich die mehrfach redundante Kopplung der beiden Netzwerkringe 6, 7 ergibt. Die im Netzwerk verbundenen Ports der Switches SW1-SW8 und der Koppel-Switches KS1-KS4 sind dabei speziell als redundante Ports, R-Ports, ausgewiesen, die in der Figur nur bei den Koppel-Switches KS1-KS4 jeweils mit R0-R3 bezeichnet sind. In den VLAN-Tabellen 3 der Koppelknoten KS1 und KS2 sind der VLAN-ID 4 des eigenen Ringes 6 jeweils die Ports R0 und R1 zugeordnet, der VLAN-ID 4 des anderen Ringes 7 hingegen alle Ports R0-R3. Entsprechendes gilt für die VLAN-Tabellen 3 der Koppel-Switches KS3 und KS4.

Über den Netzwerkknoten SW1 in Ring 6 wird ein zyklischer Frame 2 eingespeist, der an den Knoten SW5 in Ring 7 adressiert ist, und in beiden Richtungen als Original- (durchgezogene Pfeile) und Duplikat-Frame 2 (gestrichelte Pfeile) versendet. Dabei wird der Frame 2 mit einem VLAN-Tag 5 eingespeist, der sowohl die VLAN-ID 4 des Empfänger-Ringes 7 als auch die des eigenen Ringes 6 enthält. An den im Tag-Mode betriebenen Koppel-Switches KS1 und KS2 wird anhand der R-Port-Parametrierung der Ports R0-R3 ermittelt, dass der an Port R1 empfangene Frame 2 an alle anderen R-Ports R0, R2 und R3 weitergeleitet werden soll. Die VLAN-Adresstabelle 3 der Koppel-Switches KS1 und KS2 ergibt als Ports für die Weiterleitung Ports R0 bis R3. Das Ergebnis der Zielportfindung ist die Schnittmenge beider Teilergebnisse und liefert somit Port R0, R2 und R3. Der Original-Frame 2 mit der VLAN-ID 4 des Ringes 7 wird also in die benachbarte Ringstruktur 7 über Ports R2 und R3 ausgeleitet und im eigenen Ring 6 über Port R0 weitergeleitet. Im weiteren Verlauf wird der Original-Frame im Switch SW4 mit dem Duplikat-Frame 2 im Ring 6 mittels eines speziellen Verfahrens ausgelöscht.

Der ausgeleitete Original-Frame 2 wird dann im Ring 7 ebenfalls redundant über jeweils beide R-Ports R0 und R1 an den beiden Koppel-Switches KS3 und KS4 eingeleitet. Dabei löschen sich die beiden Frames 2, die vom Port R1 des Koppel-Switches KS3 und vom Port R0 des Koppel-Switches KS4 eingeleitet wurden, gegenseitig aus, so dass nur die vom Port R0 des Koppel-Switches KS3 und die vom Port R1 des Koppel-Switches KS4 eingeleiteten Frames 2 übrig bleiben, die somit gewissermaßen wiederum einen Original- und einen Duplikat-Frame 2 bilden. Diese laufen entgegengerichtet durch Ring 7 und werden auch beide vom Netzwerkknoten SW5 empfangen, im Knoten SW5 jedoch wird einer vernichtet (Frameauslöschung), so dass nur ein Frame 2 von der lokalen Applikation empfangen wird.

Eine genauere Betrachtung verdient noch das Schicksal der zwischen den Koppel-Switches KS1-KS4 verlaufenden Frames: KS1 erhält als erstes den von Switch SW1 eingespeisten Original-Frame und sendet diesen im nächsten Schritt an alle weiteren Koppel-Switches KS2-KS4, die ihrerseits im wiederum nächsten Schritt den am jeweiligen Empfangsport empfangenen Frame an allen weiteren R-Ports versenden, da dem eingespeisten Frame 2 sowohl die VLAN-ID 4 des Empfänger-Ringes 7 als auch die des Einspeiseringes 6 zugeordnet wurde (VLAN-SourceID und -DestinationID) und somit der Frame 2 von den Koppel-Switches KS3 und KS4 wieder in das Teilnetzwerk 6 zurückgespeist wird. Dadurch löschen sich nicht nur, wie oben beschrieben, die Frames zwischen KS3 und KS4 aus, sondern auch die zwischen KS2 und KS3 sowie zwischen KS2 und KS4.

Auch bei diesem in der Figur dargestellten Ausführungsbeispiel, bei dem die Zielportsuche durch eine VLAN-SourceID 4 erweitert wird, werden zyklisch redundante Frames 2, welche Switches SW1-SW8, KS1-KS4 innerhalb derselben Ringstruktur 6, 7 adressieren, nicht ausgeleitet.

Zusammenfassend betrifft die Erfindung ein Verfahren zur Bestimmung zumindest eines Zielports, an den ein an einem Empfangsport eines Netzwerkknotens mit zumindest zwei in einem Netzwerk verbundenen Ports empfangener Frame weitergeleitet wird, wobei das Netzwerk in zumindest ein Teilnetzwerk untergliedert ist und jedem Teilnetzwerk eine VLAN-ID zugewiesen ist. Um Zielports für Frames in einem Netzwerkknoten schnell bestimmen zu können, wird vorgeschlagen, dass eine VLAN-Tabelle im Netzwerkknoten abgelegt wird, in der jeder VLAN-ID zumindest zwei der Ports zugeordnet werden, dem Frame zumindest eine VLAN-ID zugeordnet wird und die der zumindest einen VLAN-ID zugeordneten Ports, die nicht gleich dem Empfangsport sind, als Zielports bestimmt werden.

## Patentansprüche

1. Verfahren zur Bestimmung zumindest eines Zielports (P1), an den ein an einem Empfangsport (P0) eines Netzwerkknotens (1, SW1-SW8, KS1-KS4) mit zumindest zwei in einem Netzwerk (8) verbundenen Ports (P0-P3, R0-R3) empfangener Frame (2) weitergeleitet wird, wobei
- das Netzwerk (8) in zumindest zwei Teilnetzwerke (6, 7) untergliedert ist und
- jedem Teilnetzwerk (6, 7) eine VLAN-ID (4) zugewiesen ist, und
- eine VLAN-Tabelle (3) im Netzwerkknoten (1, SW1-SW8, KS1-KS4) abgelegt wird, in der jeder VLAN-ID (4) zumindest zwei der Ports (P0-P3, R0-R3) zugeordnet sind,
- dem Frame (2) zumindest eine VLAN-ID (4) zugeordnet wird und
- die der zumindest einen VLAN-ID (4) zugeordneten Ports (P0-P3, R0-R3), die nicht gleich dem Empfangsport (P0) sind, als Zielports (P1) bestimmt werden
**dadurch gekennzeichnet, dass**
es sich bei zumindest einem Teilnetzwerk (6, 7) um eine Ringstruktur handelt und
die Teilnetzwerke miteinander redundant gekoppelt sind,
und
ein über einen Zielport in ein redundant gekoppeltes Teilnetzwerk (6, 7) weitergeleiteter Frame aus dem Netzwerk (8) gefiltert wird, indem der in ein redundant gekoppeltes Teilnetzwerk weitergeleitete Frame gezielt wieder aus dem redundant gekoppelten Teilnetzwerk (6, 7) ausgeleitet wird.

2. Verfahren nach Anspruch 1,
wobei zumindest eine dem Frame (2) zuzuordnende VLAN-ID (4) in einen VLAN-Tag (5) des Frames (2) geschrieben wird.

3. Verfahren nach Anspruch 1 oder 2,
wobei als eine dem Frame (2) zuzuordnende VLAN-ID (4) die VLAN-ID (4) des Teilnetzwerkes (6, 7) gewählt wird, zu dem der Netzwerkknoten (1, SW1-SW8, KS1-KS4) gehört.

4. Verfahren nach einem der vorhergehenden Ansprüche,
wobei zumindest eine dem Frame (2) zuzuordnende VLAN-ID (4) aus einem VLAN-Tag (5) des Frames (2) entnommen wird.

5. Verfahren nach einem der vorhergehenden Ansprüche,
wobei ein VLAN-Tag (5) des Frames (2) bei Weiterleitung des Frames (2) entfernt wird.

6. Verfahren nach einem der vorhergehenden Ansprüche,
wobei die Bestimmung der Zielports (P1) derart durchgeführt wird, dass einer ersten Menge die der zumindest einen VLAN-ID (4) zugeordneten Ports (P0-P3, R0-R3) und einer zweiten Menge die in dem Netzwerk (8) verbundenen Ports (P0-P3, R0-R3), die nicht gleich dem Empfangsport (P0) sind, zugewiesen werden und als Zielports (P1) die Elemente der Schnittmenge aus der ersten und der zweiten Menge bestimmt werden.

7. Netzwerkknoten (1, SW1-SW8, KS1-KS4) mit zumindest zwei in einem Netzwerk (8) verbundenen Ports (P0-P3, R0-R3), wobei das Netzwerk (8) in zumindest ein Teilnetzwerk (6, 7) untergliedert ist und jedem Teilnetzwerk (6, 7) eine VLAN-ID (4) zugewiesen ist, mit einer VLAN-Tabelle (3); in der jeder VLAN-ID (4) zumindest zwei der Ports (P0-P3, R0-R3) zugeordnet sind, sowie mit Mitteln zur Durchführung eines Verfahrens nach einem der vorhergehenden Ansprüche.

## Claims

1. Method for determining at least one destination port (P1), at which a frame (2) received at a receive port (P0) of a network node (1, SW1-SW8, KS1-KS4) with at least two ports (P0-P3, R0-R3) connected in a network (8) will be forwarded, wherein
- the network (8) is subdivided into at least two subnetworks (6, 7) and
- each subnetwork (6, 7) is allocated a VLAN-ID (4), and
- a VLAN table (3) is stored in the network node (1, SW1-SW8, KS1-KS4) in which each VLAN-ID (4) is assigned to at least two of the ports (P0-P3, R0-R3),
- the frame (2) is assigned at least one VLAN-ID (4) and
- the ports (P0-P3, R0-R3) assigned to the at least one VLAN-ID (4) which are not the same as the receive port (P0) are determined as destination ports (P1)
**characterised in that**
at least one subnetwork (6, 7) involves a ring structure the subnetworks are coupled redundantly to each other, and
a frame forwarded via a destination port into a redundantly coupled subnetwork (6, 7) is filtered out from the network (8), **in that** the frame forwarded into a redundant subnetwork is explicitly extracted again from the redundantly coupled subnetwork (6, 7).

2. Method according to claim 1,
wherein at least one VLAN-ID (4) to be assigned to the frame (2) is written into a VLAN tag (5) of the frame (2).

3. Method according to claim 1 or 2,
wherein the VLAN-ID (4) of the subnetwork (6, 7) to which the network node (1, SW1-SW8, KS1-KS4) belongs is selected as a VLAN-ID (4) to be assigned to the frame (2).

4. Method according to one of the preceding claims,
wherein at least one VLAN ID (4) to be assigned to the frame (2) is taken from a VLAN tag (5) of the frame (2).

5. Method according to one of the preceding claims,
wherein a VLAN tag (5) of the frame (2) is removed on forwarding of the frame (2).

6. Method according to one of the preceding claims,
wherein the destination port (P1) is determined such that a first set of ports (P0-P3, R0-R3) assigned to the at least one VLAN ID (4) and a second set of the ports (P0-P3, R0-R3) connected into the network (8), which are not the same as the receive port (P0), are allocated and the elements of the intersecting set from the first and the second set are determined as destination ports (P1).

7. Network nodes (1, SW1-SW8, KS1-KS4) with at least two ports (P0-P3, R0-R3) connected into a network (8), wherein the network (8) is subdivided into at least one subnetwork (6, 7) and each subnetwork (6, 7) is allocated a VLAN ID (4), with a VLAN table (3), in which each VLAN ID (4) is assigned to at least two of the ports (P0-P3, R0-R3), as well as with means for executing a method in accordance with one of the preceding claims.

## Revendications

1. Procédé pour déterminer au moins un port de destination (P1) auquel est retransmise une trame (2) reçue au niveau d'un port de réception (P0) d'un noeud de réseau (1, SW1-SW8, KS1-KS4) avec au moins deux ports (P0-P3, R0-R3) reliés dans un réseau (8),
- le réseau (8) étant subdivisé en au moins deux sous-réseaux (6, 7) et
- à chaque sous-réseau (6, 7) étant affecté un ID de VLAN (4) et
- dans le noeud de réseau (1, SW1-SW8, KS1-KS4) étant déposé un tableau VLAN (3) dans lequel au moins deux des ports (P0-P3, R0-R3) sont associés à chaque ID de VLAN (4),
- au moins un ID de VLAN (4) étant associé à la trame (2) et
- les ports (P0-P3, R0-R3) associés à l'au moins un ID de VLAN (4) qui ne sont pas identiques au port de réception (P0) étant déterminés comme étant des ports de destination (P1),
**caractérisé en ce que** :
- au moins un sous-réseau (6, 7) est une structure annulaire ; et
- les sous-réseaux sont couplés entre eux de façon redondante ; et
- une trame retransmise via un port de destination vers un sous-réseau (6, 7) couplé de façon redondante est filtrée hors du réseau (8) par le fait que la trame retransmise vers un sous-réseau couplé de façon redondante est acheminée de manière ciblée pour ressortir du sous-réseau (6, 7) couplé de façon redondante.

2. Procédé selon la revendication 1, au moins un ID de VLAN (4) à associer à la trame (2) étant inscrit dans une balise de VLAN (5) de la trame (2).

3. Procédé selon la revendication 1 ou 2, en tant qu'ID de VLAN (4) à associer à la trame (2) étant sélectionné l'ID de VLAN (4) du sous-réseau (6, 7) dont fait partie le noeud de réseau (1, SW1-SW8, KS1-KS4).

4. Procédé selon l'une des revendications précédentes, au moins un ID de VLAN (4) à associer à la trame (2) étant tiré d'une balise de VLAN (5) de la trame (2).

5. Procédé selon l'une des revendications précédentes, une balise de VLAN (5) de la trame (2) étant retirée lors de la retransmission de la trame (2).

6. Procédé selon l'une des revendications précédentes, la détermination des ports de destination (P1) étant effectuée de manière telle que les ports (P0-P3, R0-R3) associés à l'au moins un ID de VLAN (4) sont affectés à un premier ensemble et les ports (P0-P3, R0-R3) reliés dans le réseau (8) qui ne sont pas identiques au port de réception (P0) étant affectés à un deuxième ensemble et les éléments de l'intersection des premier et deuxième ensembles étant déterminés comme étant des ports de destination (P1).

7. Noeud de réseau (1, SW1-SW8, KS1-KS4) avec au moins deux ports (P0-P3, R0-R3) reliés dans un réseau (8), le réseau (8) étant subdivisé en au moins un sous-réseau (6, 7) et à chaque sous-réseau (6, 7) étant affecté un ID de VLAN (4), avec un tableau de VLAN (3) dans lequel au moins deux des ports (P0-P3, R0-R3) sont associés à chaque ID de VLAN (4), et avec des moyens pour exécuter un procédé selon l'une des revendications précédentes.
